# EUROPEAN PATENT SPECIFICATION

(11) **EP 2 649 323 B1**
(45) Date of publication and mention of the grant of the patent: **01.05.2019**
(21) Application number: 11794479.3
(22) Date of filing: 09.12.2011
(51) Int. Cl.: F04D 29/041, F16C 17/06, F16C 27/08

(54) **THRUST BEARING DEVICE**
DRUCKLAGERVORRICHTUNG
DISPOSITIF DE PALIER DE BUTÉE

(30) Priority: 10.12.2010 IT BO20100730
(43) Date of publication of application: 16.10.2013
(73) Proprietor: Caprari S.p.A., 41123 Modena (IT)
(72) Inventor: GAMBIGLIANI ZOCCOLI, Antonio, I-41123 Modena (IT)
(74) Representative: Manzella & Associati
(86) International application number: PCT/EP2011/072382
(87) International publication number: WO 2012/076710

(56) References cited:
- DD-A1- 203 601
- DE-C- 868 087
- JP-A- 60 241 515
- US-A- 1 390 131
- US-A- 6 024 494

## Description

### Technical Field

The present invention regards a thrust bearing device, in particular for centrifugal pumps.

### Background Art

The use of so-called "Michell" type of thrust bearing devices has been known, for supporting even elevated axial thrusts generated in the functioning of generator machines, for example hydraulic turbines or operating machines, such as centrifugal pumps.

Such known thrust bearing devices are illustrated by patent GB 190500875 on behalf A. G. M. Michell who was the first to develop in 1905 a technical solution based on the concept of dynamic support operated through thrust bearing devices of the sliding type.

US 1 390 131 A and DD 203 301 A1 disclose examples of such thrust bearings.

In general, the thrust bearing devices of the sliding type comprise a couple of substantially flat surfaces on which are distributed the axial loads generated by the functioning of the machine, and between which is provided the formation and maintenance of a fluid film, generally oil or water, necessary for protecting the contacting surfaces in relative motion. A first surface is fixed, so mounted integral to the fixed parts of the machine, while the second surface is mounted integral to the rotating shaft.

The idea developed by Michell and illustrated in the cited patent consists in subdividing the first sliding surface in a plurality of adjacent sectors, thus making it discontinuous. According to the proposed solution, each sector is mounted tilting on a spherical support, in order to warrant an optimal hydrodynamic maintenance in any functioning condition. More precisely, the provision of a plurality of independent sectors and of spherical supports for each of them warrants at the same time the correct axial positioning and an optimal dynamic asset for interposing a film of fluid in sufficient measure, between the first fixed sliding surface and the second surface mobile in rotation.

A further example of known thrust bearing devices is disclosed in patent application US 2004/0066993, relating to an axial bearing of the hydrodynamic type, preferably suitable for the use in hydraulic turbines and comprising a rotor member, a fifth wheel rotating integrally with the shaft of the rotor member and a fixed support segment supported by a containment box. According to such a technical solution the fifth wheel is constituted by a matrix of plastic material and by reinforcing fibres embedded therein.

The technical solutions proposed to date are able to resist efficiently to even considerable axial thrusts but require elevated mechanical precisions, and elevated realization costs, especially for warranting the correct asset of the parts in relative motion. To such an end it's enough to note that the support segments are usually connected with the containment box through the interposition of spherical coupling means very costly. Equally the containment box usually provides a spherical coupling costly to be realized.

Furthermore in the specified sector of use, in particular in the one of the operating machines of the type of the centrifugal pumps, the need for an optimization of the efficiency rates is of particular relevance.

### Disclosure

The task of the present invention is that of solving the aforementioned problems, devising a thrust bearing device of simple and economic conception which allows a reliable functioning.

Another scope of the invention is that of providing a thrust bearing device which allows to obtain elevated efficiency rates.

Within such task, it is a further scope of the present invention that of providing a thrust bearing device suitable to be used in a centrifugal pump and to warrant an optimal functioning.

The cited scopes are attained, according to the present invention, by the thrust bearing device according to claim 1, as well as by the centrifugal pump according to claim 8.

In particular the scopes are attained by means of a thrust bearing device comprising a containment box formed by a central sleeve with axis parallel to an axial thrust to be supported, by a ring-shaped support base and by a perimeter wall. A plurality of sliding segments or sliding blocks are arranged inside the containment box, radially distributed around the central sleeve and provided with a support base oriented towards the ring-shaped support base and with an opposite sliding operating surface, conjugated to a corresponding surface portion of a rotor member subjected to the axial thrust and coaxial to the central sleeve. Also provided is a pillow that can be deformed contained abutting the central sleeve and the perimeter wall, axially interposed between the ring-shaped support base and each of the blocks, to realize a distributed and dynamic asset on each of the blocks. In practice the pillow that can be deformed serves as distributed support for each single block, acting in a dynamic and independent way, like a "water mattress", for the sequence of blocks.

Thanks to the pillow that can be deformed the orientation of each block can be registered in a dynamic way, to automatically compensate dimensional shiftings of the components placed in contact and to react to both the static and dynamic thrusts. Given that the pillow that can be deformed is able to contrast such thrusts in a distributed way, the same pillow influences the distribution and the entity of the deformations by compression, so of the subsidings resulting on the operating surface of the blocks. In other words the pillow that can be deformed is suitable to contrast the subsiding of the edges, favouring a local raising of the relative height. Such a raising locally serves as obstacle to the undesired exit of the lubricating fluid interposed between the blocks and the rotor member, to the advantage of the total efficiency rates of the machine in which the device is used.

According to the invention the formation and maintenance of a suitable film of fluid results made easier between the blocks and the rotating surface of the rotor member placed in contact. Such a scope is attained thanks to the provision of a lateral side of the block, carrying a rectangular shaped cavity which extends with a bent course inside the section of said sliding block such as to shape a localized enfeeblement of the transverse section of the block, with a so-called "bracket" effect. More precisely the presence of the cavity or notch in the lateral side of the block determines a lateral edge protruding overhang from the operating surface of the block, such as to warrant a preferential subsiding under effect of the application of the axial thrust.

In practice when the protruding edge is subjected to the axial thrust transmitted by the rotor member, it behaves as a bracket and so gets deformed bending itself. Such a flexure substantially represents a subsiding due to the enfeeblement localized in the thickness of the lateral side of the block and has the effect of locally broadening the section of the meatus defined between blocks and rotor member. Thus the inflow and/or outflow of the lubricating fluid on the block turns out favoured, at the advantage of the hydrodynamic maintenance of the thrust bearing device. Such subsidings are preferably of the elastic type, so suitable to generate dynamic subsidings of the edges during the functioning.

The combination of such effects, the sealing of the internal and external edges of the blocks and the selective opening of the lateral bracket edges, enables to obtain efficiency rates at least doubled with respect to the ones that can be obtained through the known devices.

Furthermore, according to a particular aspect of the invention, the pillow that can be deformed can be made of rubber and shape a plurality of connection portions for the blocks. Such connection portions can provide T-shaped profiles guide bodies, distributed and protruding on the same pillow, suitable to engage respective portions of the base of the blocks, to guide the mounting thereof and warrant the axial blocking thereof.

### Description of Drawings

Details of the invention shall be more apparent from the detailed description of a preferred embodiment of the thrust bearing device according to the invention, illustrated for indicative purposes in the attached drawings, wherein:

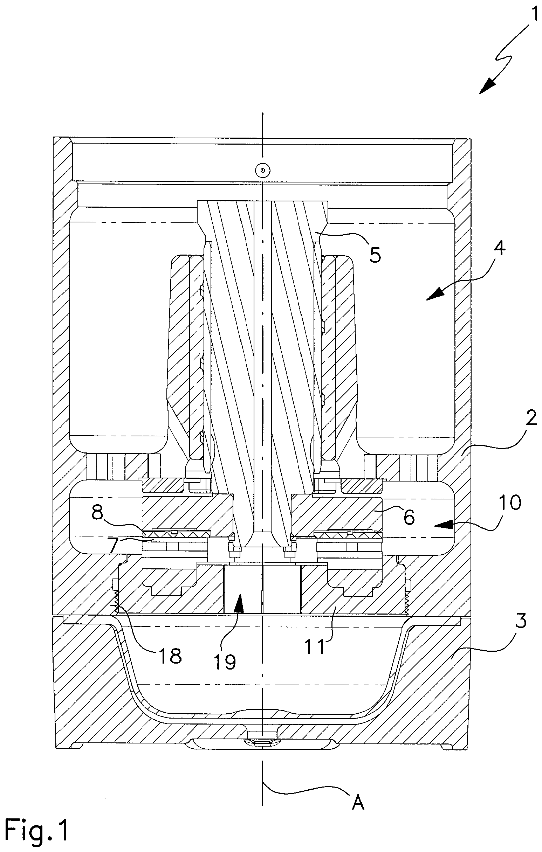

figure 1 shows an axial section view of a portion of a centrifugal electric pump in which is used the thrust bearing device according to the invention;
figure 2 shows a perspective view of the thrust bearing device according to the invention;

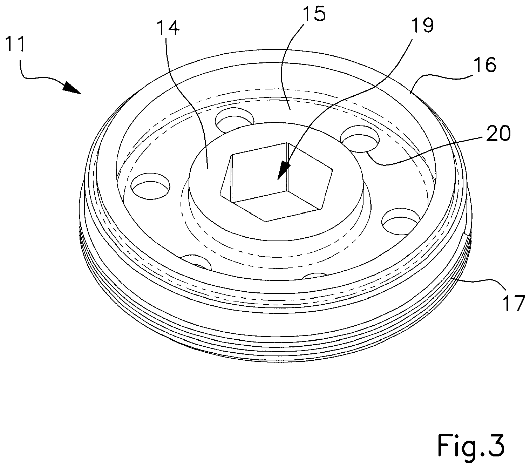

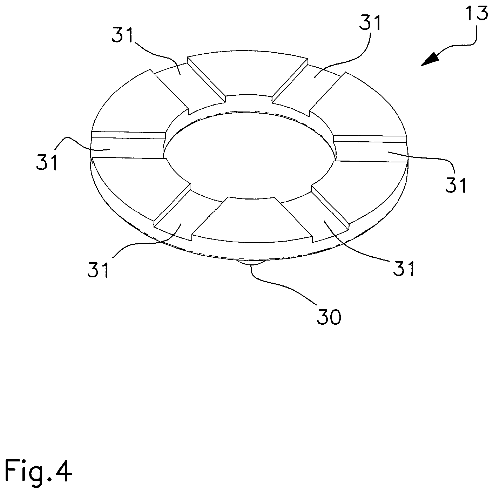

figures 3, 4 and 5 respectively show perspective views of different details of the same thrust bearing device; wherein figure 5 is the only figure clearly showing the rectangular shaped cavity which extends with a bent course inside the section of said sliding block;
figure 6 shows a perspective view of a further embodiment of the thrust bearing device according to the invention;

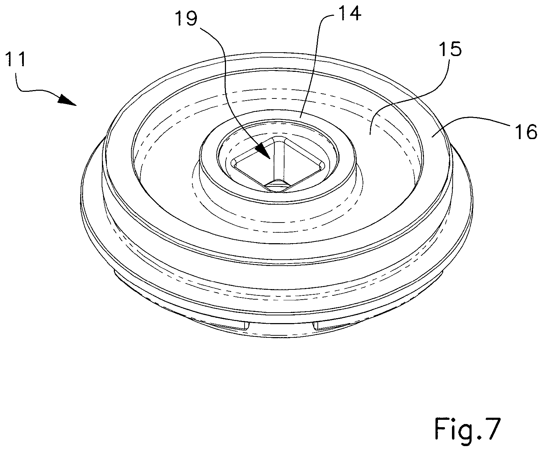

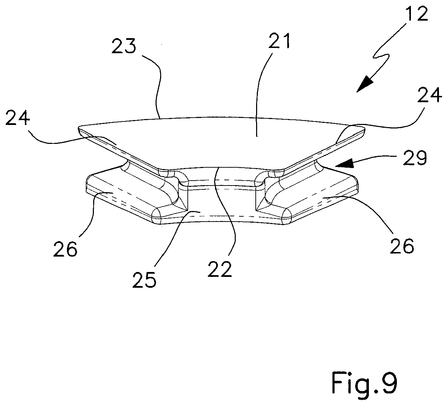

figures 7, 8 and 9 respectively show perspective views of different details of the embodiment illustrated in figure 6.

### Best Mode

With particular reference to such figures, a portion of a submerged electric pump is indicated in its entirety with 1. The electric pump is suitable to pump a liquid, for example water, from an inlet or suction section to an outlet or delivery section through one or more pumping stages, for simplicity not represented in whole. In the illustrated case the portion 1 represents a motor unit designed to be coupled to a submerged electric pump. Alternatively different applications can be provided, for operating or generating machines.

The motor unit 1 is preferably realized water-filled or, alternatively filled with another fluid suitable to the cooling and to the lubrication of the parts involved in relative motions, for example oil.

The motor unit 1 comprises a cylindrical wrapping 2 closed at one end by a cover 3 and provided at the opposite end with a connection portion, for coupling with the user machine, for example an electric pump or another machine.

The wrapping 2 is suitable to house a motor member 4 of the electric type provided with a motor shaft 5. As an example the shaft 5 is designed to be mechanically connected to the rotating members of one or more pumping stages, handling them in rotational motion about a longitudinal axis A.

The motor member 4 is housed inside the wrapping 2 by means of the interposition of a thrust bearing device 10 suitable to equilibrate the axial thrust to which is subjected the motor shaft 5 during the functioning.

More precisely on the motor shaft 5 of the motor member 4 is present a rotor member 6 shaping a fifth wheel suitable to transfer the cited axial thrust to the thrust bearing device 10. In the illustrated case the fifth wheel 6 together with the thrust bearing device 10 are arranged at one end of the motor shaft 5. In alternative it is possible to provide different dispositions, for example mounting the fifth wheel 6 and the thrust bearing device 10 at a median portion of the motor shaft 5.

The fifth wheel 6 has a ring shape for the insertion coaxial to the motor shaft 5 and presents a sliding operating face 7, substantially flat, suitable to be prearranged, in use, in front of a corresponding operating surface of the thrust bearing device 10, as better described in the following.

The operating face 7 of the fifth wheel 6 if preferably realized on a separated component, an insert 8, which can be applied in a corresponding seat of the fifth wheel 6.

Preferably the fifth wheel 6 is realized in metallic material, for example steel, while the insert 8 is realized in material particularly resistant to wear and tear, for example in impregnated fabric. In this case the microporosities of the fabric favour an effect of drag of the lubricating fluid used inside the motor unit 1.

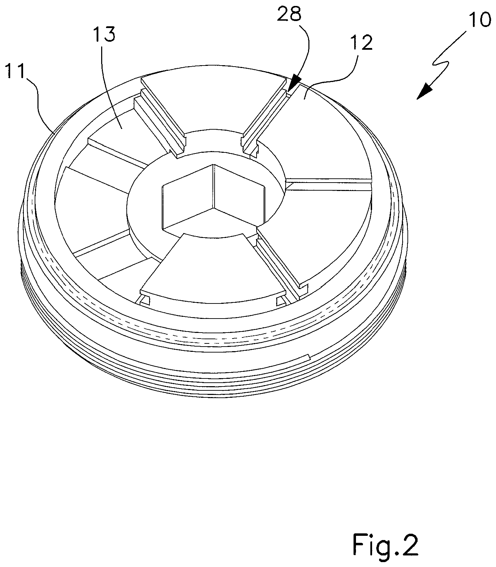

The thrust bearing device 10 comprises a containment box 11, a plurality of sliding sectors or sliding blocks 12 and a pillow that can be deformed 13 to realize a dynamic support of the blocks 12 (see fig. 2).

The containment box 11 is on its turn defined by a central sleeve 14, by a substantially flat ring-shaped base 15 and by a containment perimeter wall 16.

The perimeter wall 16 externally shapes a threaded portion 17 suitable to the fixing to a corresponding threaded seat 18 realized inside the wrapping 2. The central sleeve 14 has a central opening 19 suitable to allow the insertion of the motor shaft 5 and/or to enable the fixing on the threaded seat 18. In this latter case for example the central opening 19 can be made with a hexagonal section, so as to be able to cooperate with a suitable fixing key.

The ring-shaped base 15 has preferably a plurality of coupling seats 20, for example having a cylindrical imprint, the function of which is described in the following.

Each block 12 has an operating surface 21 suitable in use to receive the axial thrust from the corresponding operating face 7 of the fifth wheel 6 overlapped thereto. The operating surface 21 is preferably and substantially flat in the same way as the fifth wheel 6 or can provide a slightly curved conformation, to produce preferential deformations of the block 12 suitable to make easier the insertion of the lubricating fluid in the meatus defined between the cited operating surfaces. The operating surface 21 is preferably shaped as a circular sector comprised between a minor arc 22 and a major arc 23 and by a couple of radial edges 24. The circular sectors 21 of the blocks 12 are preferably equal, in such a way that in condition of use they can be arranged in sequence shaping a crown on the ring-shaped base 15 of the containment box 11 abutting the perimeter wall 16 and the central sleeve 14.

Each block has a support base 25 opposite to the operating surface 21, shaped as a circular sector as well. The support bases 25 of the blocks 12 are preferably arranged in reciprocal contact along a respective radial side 26. The support base 25 further comprises a coupling portion 27 realized for example shaped as a tooth.

It is to be noted that unlike the radial sides 26 at the sides of the support base 25, the edges 24 lateral to the operating surface 21 of two different block 12 are preferably not placed in reciprocal contact, but define between them a free space 28 suitable to receive inflowing and to diffuse the lubricating fluid.

It is also important to underline that at least at a lateral wall of the block 12, preferably on a lateral side, is provided a cavity 29 suitable to enfeeble locally the transverse section of the block 12. Therefore the radial edge 24 results protruding overhang from the same lateral side in corresponding measure. The cavity 29 or an equivalent conformation which makes protruding the radial edge 24 produces in substance a "bracket" effect. In other words, under effect of the described protruding conformation, the radial edge 24 is subject to preferential localized subsidings following the application of an axial thrust on the operating surface 21. Such preferential subsidings produce a localized increase of the transverse section of the meatus defined between the operating surface 21 and the fifth wheel 6, facilitating at the radial edges 24 the circulation of the lubricating fluid. In such a way an optimal thickness of lubricating fluid suitable to make minimal the losses by sliding friction is always warranted.

It is to be underlined that the cavity 29 of the lateral side produces the overhang conformation of the radial edge 24. Such a conformation allows to perform a controlled and selective sealing at the periphery of the operating surface 21. In other words, the dynamical and distributed support of the block 12 on the pillow 13 reacts to the axial thrust exerted by the shaft 5, determining a spherical concave deformation of the operating surface 21 of the blocks 12. Such a deformation causes a raising of the perimetric edges of the same operating surface 21, so in the described case of the minor arc 22 and of the major arc 23, with respect to the central region of the operating surface 21. Such a raising implies a peripheral sealing of the operating surface 21, obstructing there the passage of the lubricating fluid comprised between the operating surface 21 and the fifth wheel 6. In the other hand where the thickness of the block 12 is enfeebled and made discontinuous by the presence of the cavity 29, the cited localized subsiding effect of the edges 24 overhanging from the lateral side 26 occurs, which contrasts such a raising, allowing there an easy passage of the lubricating fluid. It results thereby a selective sealing of the operating surface 21, which contrasts the flow of the lubricating fluid in radial direction, retaining it, while it allows and favours the flow of the same fluid in circumferential direction.

In the illustrated embodiment the protruding radial edges 24 are symmetrical with respect to a median axis of the block 12, favouring in equal measure the inflow and the outflow of fluid in both the rotation senses of the motor shaft 5. In alternative it is possible to provide one only protruding radial edge 24 for each block 12 or protruding edges on both the lateral sides, but shaped in asymmetric manner, for example not completely radial, influencing in a differentiated way the inflow and the outflow of the fluid in the meatus.

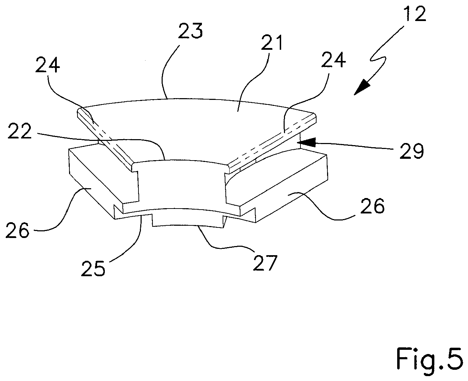

In the case illustrated in figure 5 the cavity 29 is realized on the entire radial extension of the involved radial side, so the cited axial subsiding involves the entire radial edge 24. In alternative it is possible to provide different realizations, for example with the cavity 29 localized in a median or marginal portion of the lateral side of the block 12.

In the illustrated case the cavity 29, according to the invention, has the shape of a rectangular groove, with curved extension inside the section of the block 12. Such a conformation therefore determines a bigger protruding of the radial edge 24 at a median section of the block 12, and a smaller protruding in proximity of the minor arc 22 and of the major arc 23 respectively, determining preferential subsidings on more or less extended zones in a corresponding way.

Furthermore the cavity 29 is provided preferably on each lateral side of the block 12, in a symmetric way as in figure 5 or asymmetric. Such a provision has the scope of making efficient the "bracket" effect described for any sense of rotation of the motor shaft 5, but also of creating a constant flow of lubricating fluid through the meatus, acting locally on both the corresponding inlet sections and the outlet ones at the radial edges 24.

The blocks 12 are suitable to be arranged in use supported on the pillow 13 that can be deformed. The pillow 13 that can be deformed is thus interposed between the ring-shaped base 15 of the containment box 11 and each block 12, abutting the central sleeve 14 and the perimeter wall 16. The pillow 13 that can be deformed has such a conformation as to realize a dynamic support for the blocks 12 arranged thereon. More precisely such a dynamic support allows the blocks 12 axial or angular displacements in order to realize correspondent asset regulations. In particular such regulations serve to compensate the unavoidable dimensional and shape tolerances of the surfaces subjected to relative motion.

In the illustrated case the pillow 13 that can be deformed is realized according to a structurally continuous solution shaped as a ring, suitable to be contained in the containment box 11 and to give each block 12 a support distributed on a corresponding surface. In this case, the ring 13 that can be deformed is preferably of elastic material of the rubber type, to enable the dynamic and interdependent re-asset of the blocks 12. In alternative the ring 13 that can be deformed can be of different materials that can be deformed, for example of the plastic type.

The ring 13 that can be deformed comprises preferably a plurality of coupling elements 30 suitable to the connection with the cited coupling seats 20 realized in the ring-shaped base 15 for the angular and radial fixing of the same ring.

At the side of the ring 13 that can be deformed suitable to support the base 25 of the blocks 12 are preferably provided connection portions 31 designed to be associated with the respective coupling portions 27 of the blocks 12. More precisely, in the illustrated case the connection portions 31 are shaped by radial grooves having a shape suitable to receive the teeth 27 of each block 12 for the correct radial and axial positioning. The shape of such radial grooves 31 and so of the relative coupling teeth 27 can be anyone provided that it is suitable to the cited scope of reciprocal positioning.

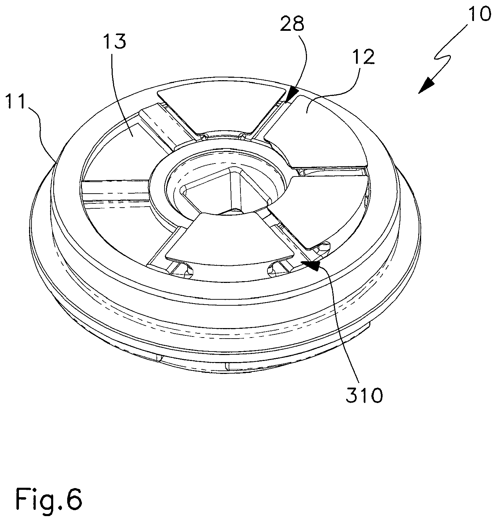

Figure 6 illustrates a second embodiment of the thrust bearing device 10 according to the invention, wherein the technical characteristics functionally corresponding to the previously described ones are indicated with the same number.

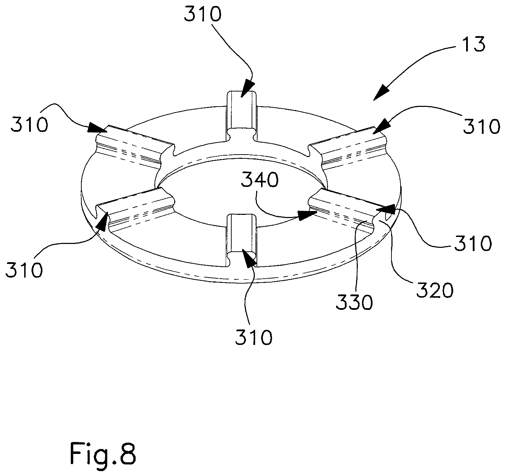

At the difference of what is already described, in the case illustrated in the figures from 6 to 9 the pillow that can be deformed 13 comprises connection portions 310 which protrude axially from the support surface for the blocks 12. The connection portions 310 are interposed to the blocks 12, preferably radially distributed. In particular the connection portions 310 have a substantially dovetail profile, as defined by a radial guide rib 320 carrying transverse borders 330 at the top, in such a way as to define between the pillow 13 and the borders 330 a guide space 340. The space 340 serves to house and axially block respective end portions of the support surface 25 of a couple of adjacent blocks 12 (see figures 6 and 8). The connection portions 310 therefore serve as a guide to the blocks 12 during the mounting on the pillow 13 and as a blocking to the axial displacement of the same blocks 12.

According to a different embodiment, not represented, the pillow 13 that can be deformed can be realized by a structurally discontinuous support. In this case the cited dynamic support function is realized by a pillow of macroscopic particles, for example microspheres or granules, free to slide on each other in a dynamic way as a response to an axial thrust. Therefore, as in the embodiment previously described, the conformation of the pillow of particles can be seen as capable of being deformed in a dynamic way.

Moreover each particle has dimensions sufficiently reduced to ensure for each block 12 a support distributed on the major number of points and in the meanwhile dimensions sufficiently elevated to avoid the exit thereof from the chamber defined between the support plane of the blocks 12, the central sleeve 14, the ring-shaped base 15 and the perimeter wall 16.

The functioning of the thrust bearing device according to the invention turns out to be easy to understand from the preceding description.

In mounting phase the thrust bearing device 10 is prearranged inside the wrapping 2 wherein is mounted the motor member 4, by fixing the containment box 11 in the relative fixing seat of the wrapping 2. Each sliding block 12 is automatically registered, each block arranging by itself in contact with a corresponding surface portion of the fifth wheel 6. Thanks to the aptitude to be deformed of the pillow 13 inside the containment box 11, in fact each block 12 undergoes a registration in axial sense, aligning its own axial height with the one of the remaining blocks 12, and in angular sense, tilting accordingly. In particular the weight of the motor unit 1 and of the machine connected thereto results sustained by the thrust bearing device 10 through transfer of the corresponding axial thrust through the fifth wheel 6, the blocks 12 and the pillow 13 that can be deformed.

When the motor member is actuated, the motor shaft 5 is driven in rotation together with the rotating members of the pump connected thereto. The components set in rotation result stressed by various thrusts, between which an axial thrust in direction of the axis A.

Further to the rotation of the motor shaft 5 the fifth wheel 6 slides on the sequence of blocks 12 of the thrust bearing device 10. Thanks to the dynamic support made possible by the pillow 13 that can be deformed the blocks 12 can vary their own asset in a dynamic way as a response to the axial thrust transmitted by the fifth wheel 6. In particular the blocks 12 can be subjected to dynamic compensation displacements, of tilting or of translation to adapt instantaneously their own asset to the operating face 7 of the fifth wheel 6.

The thrust bearing device according to the invention therefore attains the scope of enabling a reliable functioning at elevated yields. Such a scope is reached in particular by providing the pillow 13 that can be deformed, for the reasons and the effects previously highlighted.

Furthermore the thrust bearing device is able to optimize the efficiency rates, reducing the losses due to friction to the minimum, thanks to the cited protruding edges 24. In fact these edges 24 favour the continuous recirculation of a suitable film of lubricating fluid in the meatus between the blocks and the rotor member.

A characteristic of the thrust bearing device according to the invention is given by the fact that it is based on a constructively simple technical solution, which therefore requires reduced realization costs. In particular the proposed solution requires lower mechanical precisions and so lower costs with respect to the known solutions, warranting in the meantime more elevated efficiency rates.

It is further to be observed that the proposed solution requires a minor number of mechanical pieces with respect to the known solutions of thrust bearing devices, further contributing to the reduction of the realization costs.

## Claims

1. Thrust bearing device, in particular for centrifugal electric pumps, suitable to support an axial thrust through a shaft (5), comprising
a containment box (11) formed by a central sleeve (14) with axis (A) parallel in use to said axial thrust, a ring-shaped support base (15) and a perimeter wall (16);
a plurality of sliding sectors or sliding blocks (12) arranged inside said containment box (11), radially distributed around said central sleeve (14) and provided with a support base (25) oriented in use towards said ring-shaped support base (15) and having a sliding operating surface (21) suitable to be arranged faced to a corresponding surface of a rotor member integral to said shaft (5),
a pillow that can be deformed (13) contained abutting said central shaft (14) and said perimeter wall (16) and axially interposed between said ring-shaped support base (15) and each of said sliding blocks (12), in order to function as a distributed and dynamical support for said sliding blocks,
**characterized in that** each of said sliding blocks (12) comprises a cavity (29) made along a radial side of the same block (12), said cavity (29) determining in said sliding operating surface (21) the formation of a protruding edge (24) overhang from said radial side of the block (12), to locally enfeeble the transverse section of the block (12) and allowing a preferential subsiding of said protruding edge (24) under effect of said axial thrust, such as to favour the circulation of a film of lubricating fluid in the meatus between said block (12) and said rotor member (6), **in that** said cavity (29) is shaped as a rectangular groove, **and in that** said rectangular shaped cavity (29) extends with a bent course inside the section of said sliding block (12).

2. Thrust bearing device according to claim 1, **characterized in that** it comprises a couple of protruding edges (24), each protruding edge (24) being overhang from a respective said radial side of said block (12), to favour both the inflow and the outflow of said film of lubricating fluid in circumferential direction.

3. Thrust bearing device according to claim 2, **characterized in that** said couple of protruding edges (24) has an axial symmetric conformation.

4. Thrust bearing device according to claim 1, **characterized in that** said pillow that can be deformed (13) is realized by means of a structurally continuous solution, comprising a ring made of a material that can be deformed, such as to contrast said axial thrust, producing the selective sealing at the edges of said operating surface (21).

5. Thrust bearing device according to one or more of the previous claims, **characterized in that** said pillow (13) that can be deformed is made of rubber.

6. Thrust bearing device according to claim 5, **characterized in that** said pillow that can be deformed (13) has portions (310) for connecting to said blocks (12), said connection portions (310) having a substantially dovetail profile, in a way as to guide radially and block axially said blocks (12).

7. Thrust bearing device according to claims 1, 2, 3, 5 or 6, **characterized in that** said pillow that can be deformed (13) is realized by means of a structurally discontinuous support, shaping a pillow of macroscopic particles, for example microspheres or granules, free to skid on one another in a dynamical manner in response to said axial thrust.

8. Centrifugal pump comprising a thrust bearing device according to one or more of the previous claims.

## Patentansprüche

1. Drucklagervorrichtung, insbesondere für Zentrifugalelektropumpen, die dazu geeignet ist, einen achsialen Druck durch eine Welle (5) zu halten, umfassend
einen Aufnahmekasten (11), der von einer zentralen Hülse (14) mit Achse (A), die während der Nutzung parallel zum achsialen Druck ist, einem ringförmigen Tragegestell (15) und einer Umfangswand (16) ausgebildet wird;
eine Vielzahl von Gleitbereichen oder Gleitblöcken (12), die innerhalb des Aufnahmekastens (11) angeordnet sind, um die zentrale Hülse (14) radial verteilt sind und mit einem Tragegestell (25) versehen sind, das während der Nutzung zum ringförmigen Tragegestell (15) ausgerichtet ist und eine Gleitbetriebsfläche (21) hat, die dazu geeignet ist, zu einer entsprechenden Fläche eines mit der Welle (5) integralen Rotorelements gegenüberliegend angeordnet zu sein,
ein verformbares Lager (13), das enthalten ist, indem es die zentrale Welle (14) und die Umfangswand (16) anschlägt und axial zwischen dem ringförmigen Tragegestell (15) und jedem der Gleitblöcke (12) eingesetzt ist, um als ein verteiltes und dynamisches Gestell für die Gleitblöcke zu dienen, **dadurch gekennzeichnet, dass** jeder der Gleitblöcke (12) eine Vertiefung (29) umfasst, die entlang einer radialen Seite desselben Blocks (12) ausgebildet ist, wobei die Vertiefung (29) zur Bildung eines herüberragenden Rands (24) in der Gleitbetriebsfläche (21), der von der radialen Seite des Blocks (12) auskragend angeordnet ist, um den Querschnitt des Blocks (12) lokal zu schwächen und eine bevorzugte Senkung des herüberragenden Rands (24) unter der Wirkung des achsialen Drucks zu ermöglichen, so dass die Zirkulation eines Films aus Schmierfluid im Kanal zwischen dem Block (12) und dem Rotorelement (6) unterstützt wird, **wobei** die Vertiefung (29) als eine rechteckige Rille ausgeformt ist, **und wobei** sich die rechteckigförmige Vertiefung (29) mit einem gebogenen Verlauf innerhalb des Querschnitts des Gleitblocks (12) erstreckt.

2. Drucklagervorrichtung nach Anspruch 1, **dadurch gekennzeichnet, dass** sie ein Paar von herüberragenden Rändern (24) umfasst, wobei jeder herüberragende Rand (24) von der jeweiligen radialen Seite des Blocks (12) auskragend angeordnet ist, um das Einströmen und das Ausströmen des Films aus Schmierfluid in Umfangsrichtung zu unterstützen.

3. Drucklagervorrichtung nach Anspruch 2, **dadurch gekennzeichnet, dass** das Paar von herüberragenden Rändern (24) eine axialsymmetrische Ausbildung hat.

4. Drucklagervorrichtung nach Anspruch 1, **dadurch gekennzeichnet, dass** das verformbare Lager (13) durch eine strukturell kontinuierliche Lösung ausgebildet ist, umfassend einen Ring, der aus einem verformbaren Material besteht, um dem achsialen Druck entgegenzuwirken, indem die selektive Versiegelung an den Rändern der Betriebsfläche (21) hergestellt wird.

5. Drucklagervorrichtung nach einem oder mehreren der vorhergehenden Ansprüche, **dadurch gekennzeichnet, dass** das verformbare Lager (13) aus Kautschuk besteht.

6. Drucklagervorrichtung nach Anspruch 5, **dadurch gekennzeichnet, dass** das verformbare Lager (13) Abschnitte (310) hat, um die Blöcke (12) zu verbinden, wobei die Verbindungsabschnitte (310) eine im Wesentlichen schwalbenschwanzförmige Kontur haben, um die Blöcke (12) radial zu führen und axial festzuspannen.

7. Drucklagervorrichtung nach Anspruch 1, 2, 3, 5 oder 6, **dadurch gekennzeichnet, dass** das verformbare Lager (13) durch eine strukturell unterbrochene Lösung ausgeführt wird, indem ein Lager aus makroskopischen Partikeln, z. B. Mikrosphären oder Granulaten, ausgebildet wird, die als Reaktion auf diesen achsialen Druck auf eine dynamische Weise aufeinander gleiten können.

8. Zentrifugalpumpe umfassend eine Drucklagervorrichtung nach einem oder mehreren der vorhergehenden Ansprüche.

## Revendications

1. Dispositif de palier de butée, en particulier pour pompes électriques centrifuges, apte à supporter une compression axiale à travers un arbre (5), comprenant un boîtier de contenance (11) formé par un manchon central (14) avec un axe (A) parallèle lors de l'utilisation à ladite compression axiale, une base de support en forme d'anneau (15) et une paroi périmétrale (16);
une pluralité de secteurs coulissants ou de blocs coulissants (12) disposés à l'intérieur dudit boîtier de contenance (11), répartis radialement autour dudit manchon central (14) et pourvus avec une base de support (25) orientée lors de l'utilisation vers ladite base de support en forme d'anneau (15) et ayant une surface de fonctionnement coulissante (21) apte à être disposée face à une surface correspondante d'un organe de rotor solidaire dudit arbre (5),
un tampon qui peut être déformé (13) contenu en butée contre ledit arbre central (14) et ladite paroi périmétrale (16) et interposé axialement entre ladite base de support en forme d'anneau (15) et chacun desdits blocs coulissants (12), afin de fonctionner comme un support réparti et dynamique pour lesdits blocs coulissants, **caractérisé en ce que** chacun desdits blocs coulissants (12) comprend une cavité (29) réalisée le long d'un côté radial du même bloc (12), ladite cavité (29) déterminant dans ladite surface de fonctionnement coulissante (21) la formation d'un bord en saillie (24) saillant dudit côté radial du bloc (12), pour affaiblir localement la section transversale du bloc (12) et permettant une descente préférentielle dudit bord en saillie (24) sous l'effet de ladite compression axiale, de manière à favoriser la circulation d'un film de fluide de lubrification dans le conduit entre ledit bloc (12) et ledit organe de rotor (6), **que** ladite cavité (29) est formée comme une rainure rectangulaire, **et que** ladite cavité rectangulaire (29) s'étend avec un parcours courbé à l'intérieur de la section dudit bloc coulissant (12).

2. Dispositif de palier de butée selon la revendication 1, **caractérisé en ce qu'il** comprend un couple de bords en saillie (24), chacun bord en saillie (24) étant saillant d'un côté radial respectif dudit bloc (12), pour favoriser l'entrée et la sortie dudit film de fluide de lubrification en direction périphérique.

3. Dispositif de palier de butée selon la revendication 2, **caractérisé en ce que** ledit couple de bords en saillie (24) a une conformation symétrique axiale.

4. Dispositif de palier de butée selon la revendication 1, **caractérisé en ce que** ledit tampon qui peut être déformé (13) est réalisé au moyen d'une solution structurellement continue, comprenant un anneau réalisé d'une matière qui peut être déformée, de manière à s'opposer à ladite compression axiale, en produisant la fermeture sélective aux bords de ladite surface de fonctionnement (21).

5. Dispositif de palier de butée selon l'une ou plusieurs des revendications précédentes, **caractérisé en ce que** ledit tampon (13) qui peut être déformé est réalisé en caoutchouc.

6. Dispositif de palier de butée selon la revendication 5, **caractérisé en ce que** ledit tampon qui peut être déformé (13) a des parties (310) pour raccorder auxdits blocs (12), lesdites parties de raccordement (310) ayant un profil substantiellement en queue d'aronde, d'une manière à guider radialement et bloquer axialement lesdits blocs (12).

7. Dispositif de palier de butée selon les revendications 1, 2, 3, 5 ou 6, **caractérisé en ce que** ledit tampon qui peut être déformé (13) est réalisé au moyen d'un support structurellement discontinu, formant un tampon de particules macroscopiques, par exemple microsphères ou granules, pouvant glisser l'une sur l'autre de façon dynamique suite à ladite compression axiale.

8. Pompe centrifuge comprenant un dispositif de palier de butée selon l'une ou plusieurs des revendications précédentes.
